Europäisches Patentamt

European Patent Office

Office européen des brevets

(11) Publication number: **0 222 429**
**B1**

(12) **EUROPEAN PATENT SPECIFICATION**

(45) Date of publication of patent specification: **18.07.90**

(21) Application number: **86201771.2**

(22) Date of filing: **14.10.86**

(51) Int. Cl.⁵: **B 60 C 15/04**

(54) **Bead core element.**

(30) Priority: **13.11.85 NL 8503122**

(43) Date of publication of application:
**20.05.87 Bulletin 87/21**

(45) Publication of the grant of the patent:
**18.07.90 Bulletin 90/29**

(84) Designated Contracting States:
**AT BE DE ES FR GB IT LU NL**

(56) References cited:
**FR-A-1 189 540**
**FR-A-2 096 405**
**FR-A-2 152 078**
**FR-A-2 173 628**
**NL-A-7 008 583**
**NL-C- 136 189**

**METALS HANDBOOK, 8th edition, vol. 6,**
**"Welding and Brazing", 1971, American Society**
**for Metals, Metals Park, Ohio, US;**

(73) Proprietor: **N.V. BEKAERT S.A.**
**Bekaertstraat 2**
**B-8550 Zwevegem (BE)**

(72) Inventor: **Bossuyt, Raf**
**Harelbeekstraat 72**
**B-8550 Zwevegem (BE)**
Inventor: **Bossuyt, Ronny**
**Harelbeekstraat 72**
**B-8550 Zwevegem (BE)**

(74) Representative: **Demeester, Gabriel et al**
**N.V. Bekaert S.A. Bekaertstraat 2**
**B-8550 Zwevegem (BE)**

**Description**

The invention relates to a method of making a bead core element for a pneumatic tyre in which the front end and rear end of at least one steel wire of a predetermined length are welded together to form a substantially annular element which is subsequently finished. The invention relates also to bead cores including such bead core elements and pneumatic tyres comprising one or more of such bead cores.

A method according to the preamble of claim 1 is known from the Dutch Patent Application No. NL—A—7008583.

Said application describes how a suitable length of metal wire cord is taken, the ends of which are welded together by pressure welding, whereafter the weld is stress-relieved by annealing and the welding burr is mechanically removed. Most of the metal wires used in this case are made of steel having a carbon content between 0,60 and 0,85 weight percent, the annealing operation to relieve the weld from stress is carried out at a temperature of up to approximately 850°C, and followed by a gradual cooling. A central core of the known bead core element discloses the use of a steel wire with a carbon content of 0.04 weight percent. But this central core forms only a small part of the whole cross-section. Thus, the above described annealing operation is necessary because of the strength reduction that arises in the weld as a result of the welding operation and in order to reduce brittleness in the welding zone. A steel wire with a carbon content of 0,6—0,85 percent normally has a tensile strength of e.g. approximately $1680N/mm^2$. Due to the welding operation, the weld will have a tensile strength after cooling of the order of approximately $440N/mm^2$. By submitting the weld to a tempering treatment, the tensile can be raised to a value of the order of $1100N/mm^2$.

The welding area still has a considerably lower strength relative to the metal wire part not affected by the welding operation. When the bead core thus formed is placed in a pneumatic tyre, it will be clear that the strength of the bead core will depend on that of the weakest spot in the bead core. In this case, this means that the weakest spot is the weld.

The known method, therefore, has the disadvantage that a basically very strong wire, as it is transformed into a bead core element, is provided with a weak spot as a result of the manufacturing method so that the total strength of the formed element is very negatively influenced; in addition, the wire containing 0,6—0,85 weight percent carbon is expensive and difficult to process which makes its use less attractive.

Another disadvantage of the use of high-grade steel wire is, of course, the necessity of a tempering treatment. This tempering treatment must be conducted with utmost care, takes extra time, and is, therefore, unattractive. However, in this case, it is absolutely essential in view of the aforementioned substantial reduction in strength and the resulting embrittlement.

Applicant has now quite surprisingly found that it is possible to carry out a method of the abovementioned type, whereby the tempering operation at high temperature is not longer necessary.

Therefore, the method according to the invention is characterized in that all wires of the bead core element have a carbon content of less than 0,3 weight percent, that each steel wire is submitted to a drawing operation prior to its use and that the bead core element formed by welding is finished with the exclusion of an additional annealing treatment.

The invention is based on the following determination: when a steel wire with a carbon content in excess of 0,6 weight percent is welded, such a large reduction (over 70%) in strength occurs that a tempering operation is necessary to offset this strength loss to a certain degree.

Application has found that with steel types containing a considerably less carbon content e.g. less than 0,3 weight percent, the abovementioned strength reduction caused by the welding operation is much smaller (less than 35%). In addition, for a steel wire type with a carbon content of less than 0,3 weight percent, the additional annealing treatment to relieve the weld is not necessary since the embrittlement in the welding area is much smaller.

It will be clear that with the application of this invention substantial time savings are reached, while also the costs of the steel wire used in making the bead core elements will be much smaller than with bead core elements according to the state of the art.

Particularly, good results will be obtained when, prior to the use, the applied steel wire is submitted to a drawing operation. The tensile strength of the low-carbon steel wire (lower than 0,3 weight percent) will then rise substantially relative to the undrawn steel wire.

With great benefit the drawing operation will be applied to a reduction of at least 60%. In this case, reduction means:

$$\frac{D^2 \text{ start} - D^2 \text{ end}}{D^2 \text{ start}} \times 100\%$$

It will be very advantageous to use steel wire covered with a known coating layer. This coating layer may consist of different materials: so e.g. elastomer coating layers can be used, but, in general, in that case an adhesion layer will be applied in the form of a metal layer between the elastomer coating layer and the steel wire surface.

2

Quite advantageously, such a metal layer will be a brass layer so that the adhesion between the steel wire and the elastomer, e.g. rubber, subsequently to be applied will be improved considerably.

The method according to the state of the art has the disadvantage that bead core elements provided with a coating, or thus composed bead cores, will be seriously damaged by the high-temperature (about 850°C) tempering operating in the weld area. For example, in the case of a brass coating layer, this layer will disappear over a length of about 25 mm due to the heat treatment. In that region, adhesion between the bead core and the elastomer layer, e.g. rubber, subsequently applied, will be negatively influenced, so that the quality of the pneumatic tyre will be affected.

Since, according to the invention, the tempering operation will be left out of the method, the elastomer or metal coating layer will suffer much less damage. In the tests, the applied brass coating appeared to have been damaged only over a distance of approximately 1—2 mm.

The invention also relates to a bead core comprising one or more, separate or connected bead core elements, whereby at least one bead core element is made in accordance with the method of the invention.

Finally, the invention is also embodied in a pneumatic tyre comprising at least a carcass and bead cores coated with elastomer material, whereby this pneumatic tyre is characterized in that one or several bead cores according to the invention are applied.

The invention will now be clarified with reference to the drawing in which:

Figures 1 to 3 are cross-sectional views of sections of pneumatic tyres in which several bead cores are applied:

Figure 4 is a cross-sectional view of the setup for welding the ends of a steel wire together in order to from a bead core element.

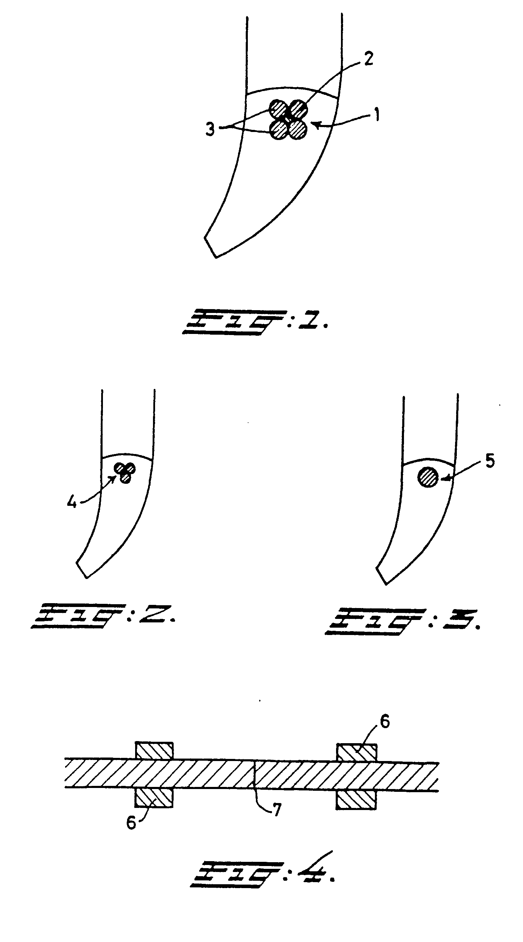

In Figure 1 reference number 1 represents a bead core composed of several bead core elements. A central wire 2 is surrounded by wires 3, whereby the wires 2 and 3 can be twisted together, but whereby it is also possible to join the wires in another manner, e.g. by means of local loops.

Figure 2 shows a bead core 4 composed of three bead core elements.

Figure 3 shows a bead core composed of one single bead core element 5.

With reference to the foregoing Figures 1 to 3, it must be observed that the bead core elements which together form the bead core, may individually also consist of one or more metal wires. The selection of the build up of the bead core is also governed by the type of tyre in which the bead core is to be processed; the heavy bead cores composed of several bead core elements will e.g. be used in car tyres; the light bead cores composed of a single wire bead core element will e.g. be used in bicycle tyres.

Figure 4 shows the setup for welding a bead core element composed of one wire. The ends of a substantially circularly bent wire have been brought together in point 7. Clamping jaws 6 for power supply are attached to the wire. The wire ends are pressed together in point 7 by means of an accurately set pressure, e.g. a pressure between 1 and 4 Newton/mm$^2$ and preferably 2,5 Newton/mm$^2$. The jaws 6 are connected to an electrical source and as the current passes through the junction 7 between the wire ends, the latter are welded together by the Joule heating supplied by the resistance of the junction 7.

In a test a steel wire containing 0,10 percent carbon, respectively 0,2 percent carbon, and a diameter of 1.82 mm are compared with a wire having the same diameter but having a carbon content of 0,6 percent. The following table shows the comparable mechanical properties.

| Type of wire | 0,1 weight %C | 0,2 weight %C | 0,6 weight %C | Remarks |
|---|---|---|---|---|
| Diam.: m | 1,82 | 1,82 | 1,82 | Reduction 92% |
| Coating: g/kg | 0,5 | 0,6 | 0,43 | brass |
| Aver. elong. at fracture % | 4,21 | 4,73 | 5,26 | |
| Aver. number of bends | 10,3 | 12,0 | 14,2 | r = 5 mm |
| Aver. number of torsions | 38,5 | 36,0 | 33,0 | 1 = 100 x diam. |
| Tensile strength N/mm$^2$ | 1040 | 1280 | 1681 | |

Striking is the great difference in average tensile strength, 1040 (0,1% C) and 1280 (0,2% C) relative to 1680N/mm$^2$ for a specimen with 0,6% C. However, in a welding test it appeared that the tensile strength of the weld for a wire containing 0,6% carbon dropped to 440N/mm$^2$. Afterwards, by means of a tempering treatment applied under strict conditions, the tensile strength was raised again to 1000—1100N/mm$^2$. In the weld of the wire containing 0,1% C, respectively 0,2% C, the tensile strength dropped only by 30% of the original tensile strength. In addition, it was not necessary to submit the weld to a tempering operation as the welding zone was sufficiently flexible (maintenance of a sufficient number of bends) or much less brittle than in the case of steel wire containing 0,6 weight % C.

**Claims**

1. A method for making a bead core element for a pneumatic tyre in which the front and rear ends of at least one steel wire of a predetermined length, under the formation of a substantially annular element, are welded together after which the formed annular element is finished, whereby a steel wire with a carbon content of less than 0,3 weight percent is used, characterized in that all wires of the bead core element have a carbon content of less than 0,3 weight percent, that each steel wire is submitted to a drawing operation prior to its use and that the bead core element formed by welding is finished with the exclusion of an additional annealing treatment.

2. A method according to claim 1, characterized in that the drawing operation has led to a reduction of the diameter of the wire of at least 60 percent.

3. A method according to claim 1 or claim 2, characterized in that the steel wire is provided with a coating layer.

4. A method according to claim 3, characterized in that the coating layer is a metal layer.

5. A method according to claim 4, characterized in that the metal layer is a brass layer.

6. A bead core (1, 4, 5) comprising one or more separate or connected bead core elements, characterized in that the bead core element(s) is (are) obtained by application of a method according to one or more of the preceding claims 1—5.

7. A pneumatic tyre comprising at least a carcass and bead cores (1, 4, 5) covered with an elastomer material, characterized in that one or more of the bead cores (1, 4, 5) according to claim 6 are applied.

**Patentansprüche**

1. Verfahren für die Herstellung eines Wulstkernelements für einen Luftreifen, wobei das Vorder- und Hinterende von zumindest einem Stahldraht von vorgegebener Länge unter der Ausbildung eines im wesentlichen ringförmigen Elements miteinander verschweißt werden, worauf das ausgebildete ringförmige Element fertigbearbeitet wird, wobei ein Stahldraht mit einem Kohlenstoffgehalt unter 0,3 Gewichtsprozent verwendet wird, dadurch gekennzeichnet, daß alle Drähte des Wulstkernelements einen Kohlenstoffgehalt unter 0,3 Gewichtsprozent besitzen, wobei jeder Stahldraht vor seiner Verwendung einem Ziehvorgang unterworfen sind, und wobei das Wulstkernelement, das durch ein Verschweißen hergestellt wird, ohne einer zusätzlichen Anlaßbehandlung fertigbearbeitet wird.

2. Verfahren gemäß Anspruch 1, dadurch gekennzeichnet, daß der Ziehvorgang zur einer Verminderung des Drahtdurchmessers von zumindest 60% geführt hat.

3. Verfahren gemäß Anspruch 1 oder 2, dadurch gekennzeichnet, daß der Stahldraht mit einer Überzugsschicht versehen ist.

4. Verfahren gemäß Anspruch 3, dadurch gekennzeichnet, daß die Überzugsschicht eine Metallschicht ist.

5. Verfahren gemäss Anspruch 4, dadurch gekennzeichnet, daß die Metallschicht eine Messingschicht ist.

6. Wulstkern (1, 4, 5), der ein oder mehrere, getrennte oder verbundene Wulstkernelemente besitzt, dadurch gekennzeichnet, daß das oder die Wulstkernelemente mit einem Verfahren gemäß einem oder mehreren der obigen Ansprüche 1 bis 5 hergestellt werden.

7. Luftreifen, der zumindest eine Karkasse und Wulstkerne (1, 4, 5) besitzt, die mit einem elastomeren Material überzogen sind, dadurch gekennzeichnet, daß ein oder mehrere der Wulstkerne (1, 4, 5) gemäß Anspruch 6 verwendet werden.

**Revendications**

1. Procédé pour fabriquer un élément de tringle de talon pour pneumatique, dans lequel on soude ensemble les extrémités avant et arrière d'au moins un fil d'acier d'une longueur prédéterminée pour former un élément sensiblement annulaire, après quoi l'élément annulaire ainsi formé est soumis à une finition, un fil d'acier dont la teneur en carbone est inférieure à 0,3% en poids étant utilisé, caractérisé par le fait que tous les fils de l'élément de tringle de talon présentent une teneur en carbone inférieure à 0,3% en poids, que chaque fil d'acier est soumis à une opération de tréfilage avant son utilisation, et que la finition de l'élément de tringle de talon formé par soudage a lieu sans traitement de recuit supplémentaire.

2. Procédé selon la revendication 1, caractérisé par le fait que l'opération de tréfilage conduit à une réduction du diamètre du fil d'au moins 60%.

3. Procédé selon la revendication 1 ou la revendication 2, caractérisé par le fait que le fil d'acier est pourvu d'une couche de revêtement.

4. Procédé selon la revendication 3, caractérisé par le fait que couche de revêtement est un couche de métal.

5. Procédé selon la revendication 4, caractérisé par le fait que la couche en métal est un couche de laiton.

6. Tringle de talon (1, 4, 5) comprenant un ou plusieurs éléments de tringle de talon separes ou reliés, caractérisé par le fait que le ou les éléments de tringle de talon sont obtenus par application d'un procédé selon une ou plusieurs des revendications précédentes 1 à 5.

7. Pneumatique comprenant au moins une carcasse et des tringles de talon (1, 4, 5) recouvertes d'un matériau élastomère, caractérisé par le fait que l'on utilise une ou plusieurs des tringles de talon (1, 4, 5) selon la revendication 6.

FIG:1.

FIG:2.

FIG:3.

FIG:4.

1